# EUROPEAN PATENT APPLICATION

(11) **EP 1 262 869 A1**
(43) Date of publication of application: **04.12.2002**
(21) Application number: 01113095.2
(22) Date of filing: 29.05.2001
(51) Int. Cl.: G06F 9/46

(54) **System and method for discovering and customizing resources in networks**

(71) Applicant: Sony International (Europe) GmbH, 10785 Berlin (DE)
(72) Inventor: Mandato, Davide, c/o Sony Int. (Europe) GmbH, 70327 Stuttgart (DE); Kovacs, Ernö, c/o Sony Int. (Europe) GmbH, 70327 Stuttgart (DE)
(74) Representative: Rupp, Christian, Dipl.Phys.

(57) **Abstract**

The present invention relates to a method and a computer software product (101) for a computing device (102) adapted to communicate with at least one managed and/or unmanaged network, providing access to one or more shared-resources and/or shared-services of that network or networks by means of a virtual device comprising a collection of information about resources and/or services available on the network, a reservation mechanism, a retrieving of remote controls (109) for these resources and/or services, and customization and assembling of this remote controls (109) to build the virtual device. The present invention hereby proposes an advantageous system for an automatic and/or user controlled assembly of different shared-resources and/or shared-services offered in a changing network environment into a single device, which is then available on the computing device and to the network used.

## Description

The present invention relates to a method, a computer software product, and a computing device for providing access to shared resources of managed as well as unmanaged networks. Generally, the present invention relates to the field of mobile multimedia middleware, shared-resource reservation mechanisms, man-machine interface, distributed processing systems, mobile ad-hoc networks, handheld computers, computer networking, and wireless communication.

A network comprises a set of nodes, i.e. fixed or mobile devices, which connect to each other through communication links. While a managed network comprises a set of nodes communicating with each other by means of a configured and controlled communication infrastructure, unmanaged networks comprise a set of nodes communicating with each other by means of a communication infrastructure spontaneously generated by the devices themselves. A mobile ad-hoc network represents a special type of an unmanaged network being characterized by a set of fixed and/or mobile nodes establishing communication links on a spontaneous, unmanaged basis. The devices of a network comprise for example communication devices for communicating data, devices offering a useful general-purpose functionality to other devices, so called shared-resources, and the like. In practice, the nodes of a network, i.e. fixed or mobile devices, comprise computing units, as for example single or multiprocessor units, which are connected to network-interface units. A shared service denotes any specific functionality offered by a device of a network that can be accessed by remote users. A service can be collocated within a resource in a one-two-one relationship. However, multiple services can be collocated within a resource, as well as the opposite, wherein the business logic of the services is "distributed" over a set of resources. Reservations can be made to obtain an exclusive permission to use a shared-resource or service, which is granted by the resource or service to one or a limited set of prospective users. For example, in a conference only the lecturer will be granted the permission to use the presentation display (e.g. a *beamer*) in the conference room or as another example only a multiplicity of persons will be allowed to queue their jobs in a printing device.

EP-A-99 124 216 and EP-A-00 124 672 of the same applicant are considered as relevant prior art.

Current wireline and wireless networks like IP-networks, and upcoming mobile ad-hoc networks can provide the user with the possibility to automatically discover and use shared-resources and services. Details, like graphical representation outlining the available shared-resources and services, a definition of a joint set of devices, and details concerning a reservation of the shared resources and services discovered on a network are left up to application-specific solutions, or even up to direct manual intervention from the user. Application-specific solutions are typically vendor specific, and thus not interoperable with others. A manual intervention from the user forces the user to take care of different tedious tasks by using various applications and/or multiple windows within one or multiple applications.

It is therefore the object of the present invention to propose a technique for easily managing access control to shared-resources and shared-services offered by one or more managed and/or unmanaged networks, on a computing device communicating with these networks.

The above object is achieved by a method for providing access to one or more shared resources and/or shared services of at least one managed and/or unmanaged networks by means of a virtual device, comprising the steps of collecting information about resources and/or services available on the network, retrieving remote controls for the resources and/or services, and assembling the remote controls to build the virtual device.

Advantageously the remote controls comprise information concerning the type of availability of the resources and/or services. Such, with the remote control passing on information about a resource or service being only mutually exclusive available or only available to a certain limit of concurrent users an access to the underlying resources and/or services can be classified. Further advantageously, a possibility to modify a type of availability is made available in form of customizing the virtual device, thereby allowing a user to claim a remote control by means provided with the virtual device effecting that the type of availability of the remote control will change by that. Advantageously, a reservation of a resource and/or service available on the network or a release of a reserved resource and/or service available on the network constitute such a change in the type of availability of the resource and/or service. Hereby, the reservation/release technique allows a conflict-free access to the available resources/services by granting permissions to access a shared-resource either on a mutually exclusively basis, or within a limited set of prospective users.

Advantageously, the virtual device is updated upon the occurrence of any changes in the availability or type of availability of resources and/or services on the network, so that a user can always utilize newly added shared-resources/services and will be informed of those no longer available via networks. Advantageously the customizing of the virtual device includes modifying the availability and/or type of availability of one or more remote controls composing the virtual device, allowing a user to employ the virtual device for controlling his access to the shared-resources/services within a single device. For example, a user will decide which printer, microphone, loudspeaker, and display screen will be the most convenient for him to use and therefore make reservations on those and deactivate the other remote controls.

Further, the virtual device is made available as a logical entity, enabling the user to select certain shared resources/services to form a singular device. For example, a mobile computing device may be combined with a big screen and a voice recognition service to form a device suited for presentations. Hereby, the virtual device may particularly advantageously comprise at least one other virtual device, so that a virtual device does not have to be build up from scratch every time but can be built by combining the complex functionality of already existing virtual devices.

The above object is further achieved by a computer software product for a computing device adapted to communicate data with managed and/or unmanaged networks comprising collecting means for collecting information from the networks, retrieving means for retrieving remote controls from the networks, and assembling means for assembling the remote controls to a virtual device.

The computer software product further advantageously comprises a coordinating means for coordinating the activities of the collecting means, retrieving means and assembling means, thus managing the access of prospective users to the shared-resource/services on behalf of the user. Preferably, the coordinating means manage an access of an application and/or user to the functionality provided by the virtual device, hereby allowing an application program or a user to select an appropriate virtual device and/or to customize the virtual device depending on her/his own criteria.

The coordinating means further advantageously manage the reservation of a resource and/or service available on the network or a release of a reserved resource and/or service available on the network, and further manage such a reservation and/or such a release according to modifications of the virtual device undertaken while customizing the virtual device. Hereby, a centralized control of the actual type of availability of the remote controls forming the virtual device is obtained. The coordinating means advantageously manages modifications in the virtual device according to changes in the topology of the network (i.e. changes in the configuration of shared-resources/service available in the surroundings). Thus it is ensured that the virtual device reflects the actual availability of the shared-resources/services on the connected networks.

The assembling device preferably makes the virtual device available as a logical entity which presents the shared-resources/services assembled to the virtual device combined in one single device. Hereby, advantageously the assembling device can assemble other virtual devices to the virtual device, thus allowing increasing the complexity of a virtual device by combining the functionality of already existing virtual devices with that of a remote control or another virtual device.

The above object is further achieved by a computing device adapted to provide access to shared-resources and/or shared-services of at least one managed and/or unmanaged network by means of a virtual device, comprising a memory device for storing data relevant for the virtual device, an ad-hoc computing manager with at least a means for the discovery of shared-resources and/or shared-services on the network, a means for the reservation and/or release of the resources and/or the services, and a means for managing a virtual device according to one of the methods described above, and control means for providing input/output facilities to a user. Such a computing device can e.g. be a stationary or a mobile computing or communication device like e.g. a personal digital assistant or a mobile phone.

The present invention is particularly advantageous in extending the concepts introduced in the European Patent Applications EP-A-99 124 216 and EP-A-00 124 472 of the same applicants, the disclosure of which hereby is incorporated by reference. More specifically, the present invention proposes an advantageous concept of a shared-resource and shared-service discovery and shared-resource/service reservation mechanism in managed and unmanaged networks with respect to the Virtual Device Manager (VDM) and the Virtual Reservation Space Manager (VRSM) concepts introduced respectively by the above-mentioned European Patent Applications.

In relation to the prior art discussed above, the present invention is advantageous in managing an access from a computing device, e.g. a mobile computing device to the remote shared resources and/or shared services available on networks the computing device is communicating with. Remote resource/services can be accessed and configured on controlled network environments as well as on unmanaged network environments where no infrastructure is available and further on network environments representing a combination of both types. As mentioned in the European Patent Application EP-A-99 124 216, the virtual device manager concept allows to handle many different attached networks. Especially it can treat the topological views of a multiplicity of *disjointed* mobile ad-hoc networks separately, should the computing device hosting the Virtual Device Manager not be able to act as a router among those mobile ad-hoc networks.

The particular advantage of the virtual device concept is the presentation of all the remote controls for the shared-resources/services in one logical device, which can be used like a physical device offering all those resource services. Furthermore, the actual manifestation can be modified by application programs or a user to fit the current needs, or to remodel the *logical* device in order to remove obsolete functionality or to add new functionality whenever it seems to be convenient. More specifically, the present invention allows users not only to be informed about the availability of resources and services that are located in the surrounding network environments, but also to reserve them so as to be able to use them in a mutually exclusive way, if such a reservation is necessary at all. The reservation mechanism is derived from VRS concept described in the European Patent Application EP-A-00 124 472, but also other reservation schemes offered by commercial off-the-shelf resources and services can be used as well. In particular, the present invention allows users to advantageously use and/or steer groups of related resources/devices from remote by accessing only one logical entity, the virtual device.

The present invention is explained in more detail in the following description in relation to the enclosed drawings, in which
Fig. 1 shows a block diagram of a computing device comprising a Virtual Device Manager according to the present invention,
Fig. 2 shows a schematic diagram for explaining the initialization process of the Virtual Device Manager, and
Fig. 3 shows a block diagram of the automatic creation and/or update of a virtual device.

The present invention deals with a method and a software unit which can for example provide the Virtual Device Manager functionality described in the European Patent Application EP-A-99 124 216 to multiple users by means of user-friendly graphical user interfaces. The Virtual Device Manager provides users with an *interactive, unified and customizable* view of the network environment, reflecting the current state of the given networks, which is most notably in the case of mobile ad-hoc networks. As such, the Virtual Device Manager exploits other ad-hoc computing manager sub-units, like the Device Discovering Manager and the Service Discovery Manager described in the European Patent Application EP-A-99 124 216.5 in order to offer a set of graphical user interfaces for interactively accessing and controlling the networked environment. The virtual device manager allows the user to select the desired services and eventually reserve them for exclusive use. Furthermore, the virtual device manager handles issues of security and authorization, builds communication objects like client and servers stubs for using the virtual device, updates the characteristics of the devices to reflect the added or sometimes lost capabilities of the local devices, and interacts with a human user or an application program to indicate the changes and allow a human user or an application program a control over the process.

An important result is a comprehensive graphical user interface representing the remote controls of all the chosen and eventually reserved services, giving thus to the user an illusion that she or he is controlling a new type of service or resource, respectively, resulting from the combination of the elemental ones. This resulting logically entity is referred to as a *virtual device.*

The virtual device therefore, is defined as the logical device consisting of one or more other physical shared-resources/services. This definition can also be recursively extended, so as to include the case of a virtual device composed of a mix and match of physical devices and other virtual devices.

From the perspective of a Virtual Device Manager, the concept of a virtual device is a dynamic composition of the remote controls of a multiplicity of shared resources/services.

The composition is regulated by two factors: Availability of shared-resources/services in the network surroundings, and user preferences, which represent a form of customization. More specifically, in the case of mobile ad-hoc networks the composition of a given virtual device may change, due to topology changes that may lead to permanent partitions of some shared-resources/services, previously aggregated in a virtual device. A partition of a resource or service in the context of this application means that these resources/services are no longer reachable from the computing device hosting the virtual device.

The abstractions of a virtual device are offered to the world in form of:
- A virtual device profile, which contains user's preferences about the composition and presentation aspects of the virtual device and which hereby extends the information (if present) contained in the profiles associated with the various shared-resources/services that compose the virtual device. The virtual device profile can be used to update the actual profile of the device to reflect the addition or loss of the new capabilities provided by the added devices.
- A set of application programming interfaces to access the device. Alternatively, a set of universal resource identifiers may optionally be used for communicating with the devices collated in the virtual device. The application programming interfaces can be internal interfaces dynamically added to the system, or they can be a pair of client stub/server stubs that enable the virtual device to be used in a distributed system.
- A comprehensive graphical user interface for controlling the virtual device in a user-friendly fashion.

The components of a virtual device are actually implemented as proxies like e.g. client stubs, which are published by the shared-resources/services themselves, like e.g. through a Directory Agent or a class loader mechanism, and which contain the physical address of the target shared-resource/service. In this way, applications making use of the virtual device manager's application programming interface 114 can address components of a given virtual device by software references and/or logical names.

In addition, the present invention offers a user to advantageously personalize the use of a virtual device and to store personalization information in form of user profiles in a data storage unit for later retrieval.

Furthermore, this invention allows users to advantageously store those user profiles on dedicated computers associated with a given mobile ad-hoc network, like an Entry Gateway Server (EGS), whose concept is described in the European Patent Application EP-A-00 116 036, or even on centralized repositories like the Context Aware Mobile Portal (CAMP) described in the European Patent Application EP-A-00 122 560.

Further, this invention can be advantageously but not exclusively used for implementing the proactive discovery functionality of the EGS, as described in the European Patent Applications EP-A-99 124 216.5 and EP-A-00 116 036.5. For example, an EGS collocated in an airport can use the Virtual Device Manager functionality so as to *precompute* the network topology of any mobile ad-hoc network available within the airport area. Travelers using mobile computing devices outfitted with the Virtual Device Manager functionality can thus detect the EGS and retrieve from it either the topology information or information about a possible virtual device. In this way, one can save time and resource consumption, by limiting the efforts to carry out device discovery, service discovery, and virtual device generation on the mobile device itself.

To this extend, the present invention regards an EGS as a special form of a Virtual Device Manager-enabled service, advertising topology information to any prospective user and hosting customization information on behalf of users with the exception that the EGS provides templates of virtual devices rather than turnkey instances of virtual devices. This means, that it is always up to a user's discretion, either interactively or through profiling, to instantiate and reserve any mutually exclusive component of a given virtual device template.

Even though the virtual device concept presented until now specifically addresses the case of mobile ad-hoc networks, its functionality is intended to be applicable not only to mobile ad-hoc networks, but also to a much broader context, including any other kind of communication network like among others a Personal Area Network (PAN), a Local Area Network (LAN), a Metropolitan Area Network (MAN), a Wide Area Network (WAN), and/or the Internet.

Aspects, on how the Virtual Device Manager functionality implemented by this invention can be put to use, i.e. how graphical user interfaces shall look like and how they may be used can be found in the European Patent Application EP-A-99 124 216.

After having explained the general concept, the details of the invention will now be shown with reference to the figures.

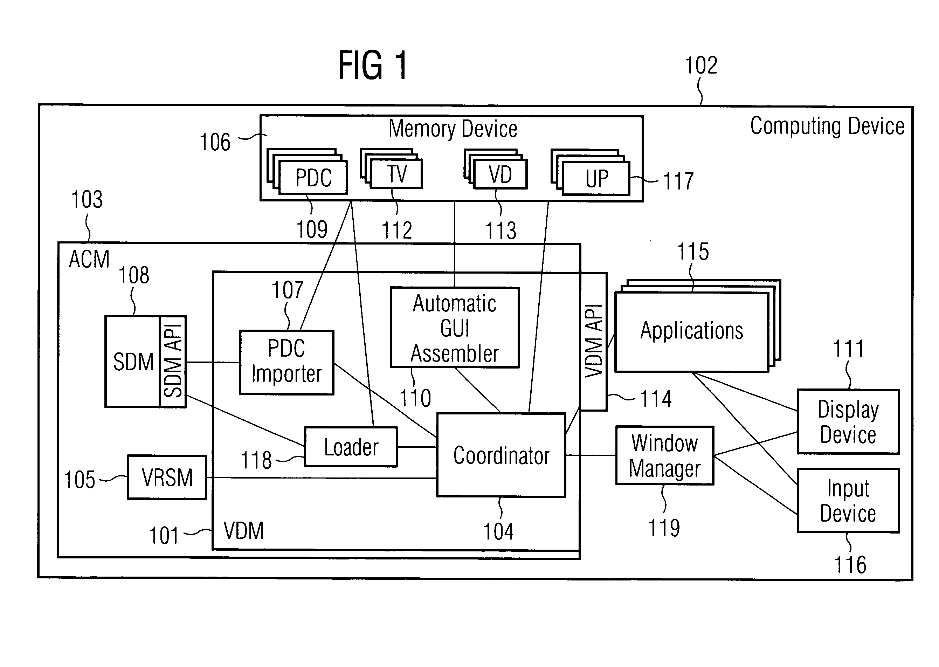

Fig. 1 shows the functional components of a Virtual Device Manager according to the present invention. A user accesses the Virtual Device Manager unit 101 through a mobile computing device 102, i.e. a Personal Digital Assistant (PDA) or a mobile phone or the like. As described in the European Patent Application EP-A-99 124 216.5 the Virtual Device Manager unit (VDM) 101 is one of the sub-units of an Ad-hoc Computing Manager (ACM) unit 103. The VDM 101 is composed of four major internal sub-units, a Coordinator 104, a Proxy Device Controller (PDC) Importer 107, an automatic Graphical User Interface (GUI) Assembler 106, and a Loader 118.

The Coordinator 104 is the core of the Virtual Device Manager 101 in so far as it initializes, coordinates and deactivates the other sub-units and the Virtual Reservation Space Manager (VRSM) unit 105, described in the European Patent Application EP-A-00 124 472, reads and writes data from and to the memory device 106, and manages an access of prospective users to the VDM functionality. The memory device 106 can be implemented as any combination of volatile and/or permanent data storage devices, as made available by the computing device 102.

The Proxy Device Controller Importer 107 uses the Service Discovery Manager (SDM) sub-unit 108 of the Ad-hoc Computing Manager 103 in order to retrieve the remote controls of the reserved shared-resources/services. This can be implemented by Remote Procedure calls, use of proxies, use of XML-based scripts or the like. Such remote controls are stored in the memory device 106 and are therein after termed PDCs 109.

The automatic GUI assembler 110 combines the PDCs 109 of all the detected and reserved shared-resources/services in one PDC representing the resulting virtual device (VD) 113. The hereby created virtual device is associated with the graphical user interface, which will be typically mapped to an application window by using default settings and/or user preferences, for what window layout and other presentation issues are concerned. The Virtual Device Graphically User Interface (VD GUI) is therefore created, updated and/or destroyed by the automatic GUI assembler 110, which maintains a copy of the virtual device (VD) in the memory device 106.

The loader 118 keeps searching EGS's and, once one has been found, retrieves pre-computed topology views (TV) 112, stores them in the memory device 106, and informs the coordinator 104. External to the VDM 101 is the VRSM 105 as a sub-unit of the ACM 103, which offers a modified version of the Virtual Reservation Space Manager (VRSM) concept presented in the European Patent Application EP-A-00 124 472. More specifically, the VRSM unit 105 takes care of detecting network topology changes and managing the reservation/release of shared-resources/services. It has to be emphasized, that the term "network topology" used in this context and in the context of the European patent application presenting the VRSM concept has to be understood in a broad sense, so as to address a collection of not only physical network elements (i.e. the resources) but also of each individual service collocated on any of such network elements. The difference between the hereby proposed version of the VRSM 105 and the concept described in the above-cited European patent application are for one, that the VRSM 105 is considered as a sub-unit of the ACM 103 rather than the opposite, as instead described in the cited patent application. On the other hand the VRSM 105 monitors a multiplicity of physically disjointed mobile ad-hoc networks as long as the computing device 102 on which the virtual device manager 101 is hosted, is not able to act as a router among the mobile ad-hoc networks, whereby each mobile ad-hoc network is associated with a given unique identity, which is arbitrarily chosen by the VRSM 105 unit. Both these choices have been made in order to make the design of the Virtual Device Manager 101 consistent with the original concept presented in the European Patent Application EP-A-99 124 216.

The VRSM 105 returns to the coordinator 104 views of the current network topologies in form of topology view (TV) 112 information elements. Each topology view 112 is associated with a unique identifier as aforementioned.

For a virtual device manager man-machine interface the Virtual Device Manager 101 offers an application programming interface, the VDM API 114, which can be accessed by any application 115 interested in VDM services, so as to get copies of the TV 112 and VD 113. Applications 115 display TV 112 information and render VD 113 graphical user interfaces on display devices 111. The applications 115 can utilize user preferences obtained through input devices 116, so as to instruct the VDM 101 how to personalize both the TV 112 and VD 113. This personalization aspect is described in detail further below. Furthermore, users can also give commands through the input device 116 in order to steer the remote shared-resource/services that are mapped through the VDM functionality.

Alternatively, users can directly access the VDM functionality by using a COTS (commercial off-the-shelf) window manager 119, for example any COTS web-browser, MS Windows, X-Window or the like, which simply provide the framework functionality for enabling the graphical user interface associated with the TV 112 and VD 113, which are built by the VDM. For instance, these graphical user interfaces can be implemented as applets, so that the window manager 119 can be reduced to a simple web-browser.

For a personalization of the topological views a user can decide to ignore ory prune one or more portions of a given TV 112, or zoom some portions out, if these portions are of no interest for the user at the moment. Of course, users shall be able to *zoom in* and more generally regain a complete view of the effective TV 112 at any time upon command.

For this purpose, the coordinator 104 shall treat any zoom-in or zoom-out and/or pruning action as a list of instructions to be saved on the memory device 106 and to be applied to the corresponding TV 112. Since the VDM 101 is designed so as to be used by multiple users, this list of instructions shall be maintained within a User specific Profile (UP) 117 in the memory device 106.

A personalization of a virtual device 113 first of all coincides with requests for reserving or releasing any shared-resource/service advertised in a given TV 112. To this extent, the coordinator 104 shall forward any such user request to the VRSM 105 and successively request the automatic GUI assembler 110 to build or update the corresponding VD 113 of a given user as soon as a confirmation of a reservation or release, respectively, are notified by the VRSM 105.

Similarly to the case of a TV 112, the coordinator 104 allows applications and thereby users to customize also the *layout* and other *presentation aspects* of the graphical user interface associated with the given VD 113. A customization information can be stored within the virtual device 113 or separately on a user profile 117. The latter approach is suggested for all those user preferences related to general parameters like language, color, palette or the like.

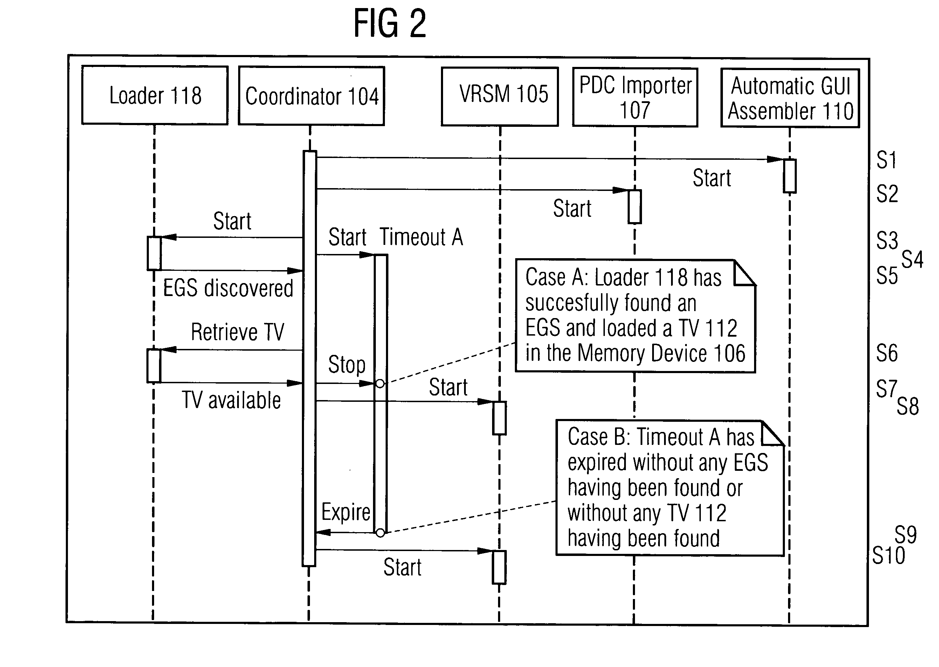

Figure 2 is a message sequence chart indicating the initialization process of the Virtual Device Manager sub-units and the VRSM 105. At initialization the coordinator 104 activates first the automatic GUI assembler 110 (step S1) then the PDC importer 107 (step S2), next the loader 118 (step S3) and finally, the VRSM 105 (step S8).

Upon initialization, the loader 118 registers requests from the coordinator 104 for notifications of detection events concerning EGS' available in the surroundings in step S3.

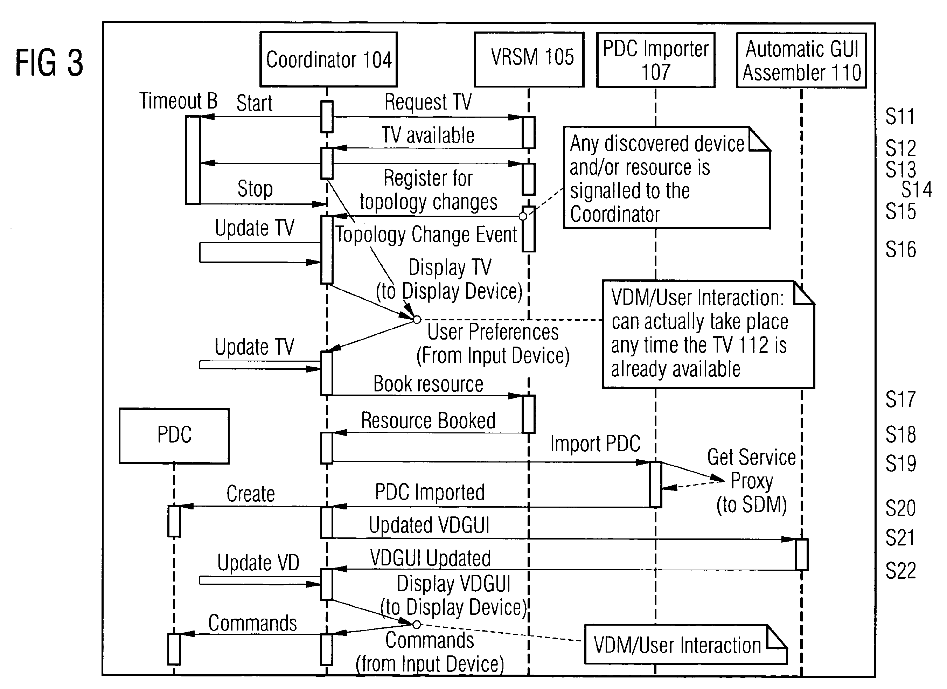

At start-up, the coordinator 104 waits beginning with step S4 for notifications from the loader 118 for the duration of a configurable amount of time, which is in the following denoted as "timeout A". Should an EGS discovery event be forwarded by the loader 118 (step S5), the coordinator 104 would then request the loader 118 to retrieve a TV 112 (step S6), otherwise, after expiration of "timeout A" (step S9), the coordinator 104 would activate the VRSM 105 (step S10) and then continue with the procedures described in the explanation of figure 3.

Once the loader 118 has successfully retrieved a TV 112 and stored it as a template in the memory device 106 the coordinator 104 then creates a working copy of this template in the memory device 106, notifies the application 115, and ultimately notifies the user by e.g. displaying the information on the display device 111. The coordinator 104 is subsequently bound to activate the VRSM 105 and to continue directly with step S11 of the procedure described in the explanation of figure 3.

The loader 118 enters after start-up in an operation loop mode (see figure 2), following the steps given below.

First, beginning in step S3, the loader 118 searches for an Entry Gateway Server by using the service discovering functionality offered by the SDM 108. More specifically, the loader 118 registers with the SDM 108 for being notified every time a service discovery service - as described in the European Patent Application EP-A-99 124 216 is available in the surroundings. Once a service discovery service has been detected (step S5), the loader registers with the SDM 108 for being notified every time an EGS service is advertised on the service discovery service. On the discovery of an EGS, the loader 118 informs the coordinator 104 about this event. For this purpose, each EGS is identified with a unique identifier like for example the service identity described in the above-cited European patent application or the like.

Upon explicit request from the coordinator 104 in step S6, the loader 118 retrieves the topology information from the given detected EGS and stores the results as a topology view TV 112 in the memory device 106 (step S7). This TV 112 intentionally works as a template, which the user can later customize. After the storage action has been completed, the loader 118 informs the coordinator 104 whether this operation has been successfully or unsuccessfully accomplished and, in case it has been completed successfully, also a reference - like for example the memory address of the copy of the TV 112 saved in the memory device 106 is forwarded to the coordinator 104.

Third, upon explicit request from the coordinator 104 the loader 118 can eventually be used for retrieving customization information concerning the given user from the detected EGS. As aforementioned, the user profile UP 117 storage functionality can, however, be implemented also by entities other than EGS', like for example the "Context Aware Mobile Portal (CAMP)" described in the European Patent Application EP-A-00 122 560. For this purpose the loader 118 uses a specific communication protocol, which is typically based on HTTP, for interacting with such entities. The corresponding functionality will be implemented in a plug-in sub-unit of the loader 118.

The operation loop mode in which the coordinator 104 enters after start-up is shown in figure 3 following the steps given below.

First, the coordinator 104 requests from VRSM 105 a TV 112 in step S11. If a topology view is currently not available, the coordinator 104 enters in a waiting mode, waiting notifications from either the loader 118 which is not shown in figure 3, or the VRSM 105, concerning available TV 112 information within a configurable amount of time (timeout B) in step S13. If nothing happens within the time-span depicted by the timeout B, the coordinator notifies users in step S15 about missing information concerning the surroundings and restarts the timeout B; and so on, until either the desired information is retrieved or the VDM functionality is shut down in step S13.

Second, once a TV 112 is available, the coordinator registers with the VRSM 105 its interest in being notified whenever a change in the TV 112 occurs in step S14. This process can be repeated until the step is applied with respect to the TVs of all the mobile ad-hoc networks and other types of networks as well detected in the surroundings. In step S16 any discovered device and/or resource is signaled by the VRSM 105 to the coordinator 104.

Third, the applications 115 or the window managers 119 at this point allow a user to access the graphical user interface of the topological view in order to carry out the personalization task described before. Furthermore, a user can leverage the TV 112 information so as to decide which shared-resources/services to book. Actually, a user interaction with the Virtual Device Manager can take place any time, once the TV 112 is already available.

Fourth, the coordinator 104 forwards to VRSM 105 in step S17 any users' booking request as obtained either from the VDM API 114 or directly from the topological view graphical user interface managed by the window manager 119.

Fifth, once the VRSM 105 confirms to the coordinator 104 the successful booking of a given shared-resource/service in step S18, the coordinator 104 requests the PDC importer 107 to download a PDC 109 associated with the given shared-resource/service in step S19.

Sixth, the PDC importer 107 uses the services of the SDM 108 in order to carry out its task, stores the result in the memory device 106, and finally signals back to the coordinator 104 in step S20 the availability of the requested PDC.

Seventh, at this point S21, the coordinator 104 requests the automatic GUI assembler 110 to assemble the graphical user interface with the new PDC 109 together with those already in use if there are any. In order to carry out its duties, the automatic GUI assembler 110 accesses directly the memory device 106 in order to retrieve the new PDC 109, the current virtual device VD 113 used by a given user, and any user preferences that are eventually stored in a separate user profile UP 117. To this extent, every time a user inputs some preferences through the input device 116, the coordinator stores these commands in the UP 117 and subsequently invokes again the automatic GUI assembler 110 in order to carry out the task.

Eighth, once the preparation and customization of the graphical user interface associated with the VD 113 has been completed in step S22, a user can finally use that graphical user interface to remotely steer the shared-resources/services mapped through the graphical user interface according to the procedural logic of the assembled PDCs 109.

Any notification generated by the loader 118 after the initialization phase will be analyzed by the coordinator 104 in order to determine whether the proposed TV 112 is already available or not. If it is available, the notification is silently discarded. Otherwise, the coordinator 104 applies a similar process, which is based on user interaction as described above for a newly discovered network, for example in parallel to the current processing.

As aforementioned, notifications of newly discovered networks can also be provided by the VRSM 105 itself, with the difference, however, that the latter has to perform device and service discovery by itself, whereas the loader 118 is able to retrieve a pre-computed TV 112 from entry gateway servers.

A user may further create User-Profile-templates containing a list of physical resources/services which are to be automatically composed when desired, like e.g. a UP-template 117 containing all the resources/services to be discovered, reserved, customized, and composed within a virtual device when the user operates the computing device 102 within a certain environment like a company office, home office or the like or uses the computing device for special situations, like presentations, conference calls or the like. Assumed, a user enters his home office, she/he selects the home-office-UP. The Coordinator 104 will then immediately start the process to establish a corresponding virtual device supplying the user with all resources/services put down in the list of this home-office-UP. Later, when the user has to give a presentation, he switches to a presentation-UP supplying her/him with all resources/services specified in the list of the this UP for the respective task. The resources/services can hereby be specified by type, by name, by using RDF (Resource Description Format), XML (Extended Markup Language), or by means of any other service/resource description mechanism, because the present invention integrates all these mechanisms.

Finally, a pre-computed virtual device VD 113 can also be stored in the EGS for later re-use. Alternatively, a user can decide to store specific software agents on an EGS, which are configured with user preferences and are able to autonomously use an instance of the present invention directly situated on the EGS on behalf of the user. In this way, the computing device 102 can drastically be simplified, since all the mechanisms of the present invention can be confined to the EGS, which can be designed with plenty of resources in a sort of over-provisioning.

Advantageously, the present invention provides the user with a comprehensive virtual device associated with the corresponding graphical user interface that the user can advantageously use for monitoring and steering all the shared-resources/services she or he has reserved. The virtual device manager according to the present invention takes over the management of the reservation of any resource or service found on the network environment on behalf of the user. Hereby not only the VRSM concept, but also other reservation mechanisms may be used as well. The automatic creation and update of topology models in form of topology views of any managed and/or unmanaged network detected in the surroundings constantly provides a user with current information of the network environment so that the user is advantageously maintained up-to-date about what shared-resources/services are available in the surroundings and which she or he can reserve and use. Further, this invention advantageously offers a VDM API, which any application interested in VDM services, can access so as to get copies of the topology views and the virtual devices.

The following example illustrates and explains the usage of the virtual device manager of the present invention in the context of future personal devices carried around by human beings. Future personal devices will be networked using different types of technology. The networking can be based on wires, like for example special cables supported by consumer electronic devices, iLink, or the like but most likely networking will be based on wireless technology. Different options for wireless technologies include radio transmission, infrared transmission or transmission using the electrical properties of a human being so-called body area networks.

Examples for radio transmission wireless technology are for example Bluetooth, 60 GHz, IEEE 802.11 A/B, Hiperlan/2 or the like.

All these networking technologies can be used to connect the devices. The device discovery and service discovery mechanisms of an ad-hoc computing manager component can be used to discover the devices and their capabilities. The VDM then checks these capabilities and builds the respective virtual device. For the illustration of this example, the following personal devices might be included in the mobile ad-hoc network:
- a PDA-type of device, in the future probably carried attached to the forearm or as a form of extended wrist watch
- a wireless connected headset for audio
- a storage device attached to the belt or carried attached to the shoes
- a memory card reader, for example attached to the belt
- a mobile phone with for example GSM, UMTS, Hiperlan/2, Bluetooth or the like
- an additional display device like for example a Sony Glastron or a foldable screen
- an additional foldable display device sewed together with normal cloth fabrics, e.g. on the front or back of jackets, which might be used for commercial advertisement purposes as a form of modern sandwich men, or by youngsters who whish to share video clips or personal footages with friends.

The virtual device manager on the Personal Digital Assistant (PDA) detects the availability of the devices and configures a virtual device. Instead of the PDA capabilities with very limited storage capabilities, a limited screen size, and no audio, the newly configured device now features audio, storage capacity, a memory stick reader, a wide area or local area network connectivity and a bigger screen.

The virtual device manager has also prepared the description of the virtual device. Whenever a new multimedia call e.g. a phone call or the like arrives, the computing device can now provide the description of the virtual device instead of its own capabilities. Consequently, by analyzing the virtual device profile, the communication service to be established will now include voice/audio, high-resolution video, download of information objects like for example MP3 music or the like and storage on memory stick or on the storage device, and seamless switching to other network connections to improve QoS (Quality of Service for predictable data delivery service).

In such a way, whenever the communication service decides to supply an audio channel, the user can at least listen to this, because at the moment no micro is included. A talking feature might be desirable in a teleconference. Of course, it is unlikely that the user will carry a headset with him constantly, so that the user must be asked to wear the headset.

Unfortunately, at this point, the virtual device does not include a micro (assumed that the phone micro is not usable as a part of a virtual device) but the user might carry a deactivated micro with him. Upon activation, this micro is detected and included into the virtual device. Now, the communication service is informed about the changed virtual device capability and adds an audio communication channel for the virtual device. This now allows the user to actively participate in the teleconference call.

The example might also be extended in the sense, that instead of personal devices a user will also detect devices in his vicinity. While sitting in a train e.g., a user might use an available in-seat monitor to display a video channel.

The given example further indicates that the virtual device manager of the present invention communicates with the user for example to signal an attachment of one or more additional devices or, as shown, to request from the user the usage of a headset. This will be invoked by the VDM API for example by using multi-modal interaction with the users such as graphics, audio signals, light flashes, electronic buzzes or the like.

## Claims

1. Method for providing access to one or more shared resources and/or shared services of at least one managed and/or unmanaged network by means of a virtual device, comprising the steps of
a) collecting information about resources and/or services available on said network,
b) managing reservation of said resources/services, according to user's wishes,
c) retrieving remote controls (109) for said resources and/or services, and
d) customising and assembling said remote controls (109) to build said virtual device (113).

2. Method for providing access to one or more shared resources and/or shared services according to claim 1,
**characterised in**
**that** said remote controls (109) comprise information concerning the type of availability of said resources and/or services.

3. Method for providing access to one or more shared resources and/or shared services according to claim 1 or 2,
**characterised in**
**that** changing said type of availability is made available in form of customising said virtual device (113).

4. Method for providing access to one or more shared resources and/or shared services according to claim 3,
**characterised in**
**that** a reservation of a resource and/or service available on said network or a release of a reserved resource and/or service available on said network constitute such a change in the type of availability of said resource and/or service.

5. Method for providing access to one or more shared resources and/or shared services according to one of the claims 1 to 4
**characterised in**
**that** said virtual device (113) is updated upon the occurrence of any changes in the availability or type of availability of resources and/or services on said network.

6. Method for providing access to one or more shared resources and/or shared services according to one of the claims 1 to 5
**characterised in**
**that** customising said virtual device (113) includes modifying the availability and/or type of availability of one or more remote controls (109) composing said virtual device.

7. Method for providing access to one or more shared resources and/or shared services according to one of the claims 1 to 6
**characterised in**
**that** said virtual device (113) is made available as a logical entity.

8. Method for providing access to one or more shared resources and/or shared services according to one of the claims 1 to 7
**characterised in**
**that** said virtual device (113) can comprise other virtual devices (113).

9. Computer software product (101) for a computing device (102) adapted to communicate data with managed and/or unmanaged networks, comprising collecting means (118) for collecting information (109, 112) from said networks, managing reservation of said resources/services, according to user's wishes, retrieving means (107) for retrieving remote controls (109) from said networks, and customising and assembling means (110) for assembling said remote controls to a virtual device.

10. Computer software product (101) according to claim 9,
**characterised by**
a co-ordinating means (104) for co-ordinating the activities of the collecting means, retrieving means and assembling means.

11. Computer software product (101) according to claim 10,
**characterised in**
**that** said co-ordinating means (104) manages an access of an application and/or user to the functionality provided by said virtual device.

12. Computer software product (101) according to claim 10 or 11,
**characterised in**
**that** said co-ordinating means (104) manages the reservation of a resource and/or service available on said network or a release of a reserved resource and/or service available on said network.

13. Computer software product (101) according to claim 12,
**characterised in**
**that** said co-ordinating means (104) manages the reservation of a resource and/or service available on said network or a release of a reserved resource and/or service available on said network according to modifications of said virtual device undertaken while customising said virtual device.

14. Computer software product (101) according to one of the claims 10 to 13,
**characterised in**
**that** said co-ordinating means (104) manages modifications in the virtual device according to changes in the topology of said network.

15. Computer software product (101) according to one of the claims 9 to 14,
**characterised in**
**that** said assembling means(110) makes said virtual device available as a logical entity.

16. Computer software product (101) according to one of the claims 9 to 15,
**characterised in**
**that** said assembling means(110) can assemble other virtual devices to said virtual device.

17. Computer software product (101) according to one of the claims 9 to 16,
**characterised in**
**that** one or more of said means (104, 107, 109, 110, 112, 118) can be stored on an Entry Gateway Server external to the computing device (102).

18. Computing device (102) adapted to provide access to shared resources and/or shared services of at least one managed and/or unmanaged network by means of a virtual device, comprising
access to a memory device (106) for storing data (109, 112, 113, 117) relevant for said virtual device,
an ad-hoe computing manager (103) with at least a means for providing access to a means (108) for the discovery of shared resources and/or shared services on said network, to a means (105) for the reservation and/or release of said resources and/or said services, and to a means for managing a virtual device according to one of the methods of claim 1 to 8, and
access to control means (114, 115, 116, 111, 119) for providing input/output facilities to a user.
